# EUROPEAN PATENT APPLICATION

(11) **EP 4 807 435 A1**
(43) Date of publication of application: **16.09.2026**
(21) Application number: 26162950.5
(22) Date of filing: 06.03.2026
(51) Int. Cl.: G02C 7/08, G02F 1/29, G02F 1/1347, G02B 27/00

(54) **HYBRID LIQUID CRYSTAL LENS AND METHOD FOR DRIVING THEREOF**

(30) Priority: 13.03.2025 FI 20253100
(71) Applicant: IXI Eyewear Oy, 02150 Espoo (FI)
(72) Inventor: Kataja, Mikko, 00100 Helsinki (FI); Pitkänen, Ari, 01200 Vantaa (FI)
(74) Representative: Moosedog Oy

(57) **Abstract**

Disclosed is hybrid liquid crystal lens (100) comprising: index-matching LC lens (102); Gradient Refractive Index (GRIN) LC lens (104); first driving circuit (DC) (106) configured to drive index-matching LC lens to produce first optical power (OP); second DC (108) configured to drive GRIN LC lens to produce second OP(s); and controller (110) configured to: generate first and second drive signals for first and second DCs; determine third OP(s) by processing eye-tracking data collected by eye-tracking means (112, 510) to determine optical depth at which user of hybrid LC lens is looking; select third OP(s); determine whether third OP(s) is equal to or greater than maximum OP producible by index-matching LC lens; and when so determined, determine first OP equal to maximum OP producible by index-matching LC lens and second OP(s) equal to difference between third OP(s) and maximum OP producible by index-matching LC lens.

## Description

### TECHNICAL FIELD

The present disclosure relates to hybrid liquid crystal lenses. Moreover, the present disclosure relates to methods for driving hybrid liquid crystal lenses. Furthermore, the present disclosure relates to optical apparatuses incorporating hybrid liquid crystal lenses.

### BACKGROUND

Presently, several types of liquid crystal (LC) lenses are used in a variety of optical apparatuses. Examples of such types of LC lenses include, but are not limited to, electrically-tunable LC Lenses, index-matching LC lenses, Gradient Refractive Index (GRIN) LC Lenses, Bifocal and Multifocal LC Lenses, and Polymer-Stabilized Liquid Crystal (PSLC) Lenses. Different types of LC lenses have different structures and properties that suit various applications.

However, different types of LC lenses also have different drawbacks associated therewith. As a result, while leveraging the properties of any LC lens for a particular application, the drawbacks of said LC lens also adversely impact optical performance and usability of said LC lens. As an example, the index-matching LC lenses have only two operational states: ON and OFF, each corresponding to a fixed optical power. In the ON state, the index-matching LC lenses provide a fixed positive or negative optical power, whereas in the OFF state, the index-matching LC lenses provide zero (or near-zero) optical power. This binary operation does not allow for producing intermediate optical powers using the index-matching LC lenses. In case the index-matching LC lenses have a patterned substrate, a nature of the optical power (i.e., focusing or diverging) depends on a pattern of the substrate. As another example, the GRIN LC lenses are tunable to create a variety of optical powers, but these optical powers are limited by properties of an LC material of the GRIN LC lenses and a thickness of a layer of the LC material. A thicker layer of the LC material results in slow operation and poor image quality due to haze that is inherent in the LC material.

Therefore, in light of the foregoing discussion, there exists a need to overcome the aforementioned drawbacks.

### SUMMARY

The aim of the present disclosure is to provide a hybrid liquid crystal lens, a method for driving the hybrid liquid crystal lens, and an optical apparatus incorporating the hybrid liquid crystal lens, to leverage benefits of quick switching ability and compact design of thin liquid crystal layers in index-matching LC lenses as well as benefits of tunability of liquid crystal layers in Gradient Refractive Index (GRIN) LC Lenses. The aim of the present disclosure is achieved by the hybrid liquid crystal lens, the method, and the optical apparatus that integrate an index-matching LC lens and a GRIN LC lens in a stacked configuration, as defined in the appended independent claims to which reference is made to. Advantageous features are set out in the appended dependent claims.

Indeed the present disclosure provides at least a hybrid liquid crystal (LC) lens comprising:
an index-matching LC lens;
a Gradient Refractive Index (GRIN) LC lens, wherein the GRIN LC lens and the index-matching LC lens are arranged in a stacked configuration;
a first driving circuit configured to drive the index-matching LC lens using a first drive signal, to produce a first optical power;
a second driving circuit configured to drive the GRIN LC lens using a second drive signal, to produce at least one second optical power, wherein a combination of the at least one second optical power and the first optical power produces at least one third optical power of the hybrid LC lens.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a simplified block diagram of a hybrid liquid crystal (LC) lens, in accordance with at least one embodiment of the present disclosure;
FIGs. 2A and 2B illustrate exemplary implementations of a stacked configuration of an index-matching LC lens and a Gradient Refractive Index (GRIN) LC lens, in the hybrid LC lens, in accordance with different embodiments of the present disclosure;
FIGs. 3A and 3B illustrate an exemplary implementation of the hybrid LC lens wherein a substrate of the index-matching LC lens has a convex Fresnel pattern thereon, for producing positive and zero first optical powers, respectively, in accordance with an embodiment of the present disclosure;
FIGs. 3C and 3D illustrate an exemplary implementation of the hybrid LC lens wherein a substrate of the index-matching LC lens has a concave Fresnel pattern thereon, for producing positive and zero first optical powers, respectively, in accordance with another embodiment of the present disclosure;
FIGs. 3E and 3F illustrate an exemplary implementation of the hybrid LC lens wherein the substrate of the index-matching LC lens has a convex Fresnel pattern thereon, for producing negative and zero first optical powers, respectively, in accordance with yet another embodiment of the present disclosure;
FIGs. 3G and 3H illustrate an exemplary implementation of the hybrid LC lens wherein the substrate of the index-matching LC lens has a concave Fresnel pattern thereon, for producing negative and zero first optical powers, respectively, in accordance with still another embodiment of the present disclosure;
FIG. 4 illustrates steps of a method for driving a hybrid LC lens, in accordance with an embodiment of the present disclosure; and
FIG. 5 is an exemplary schematic illustration of an optical apparatus, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a hybrid liquid crystal (LC) lens comprising:
an index-matching LC lens;
a Gradient Refractive Index (GRIN) LC lens, wherein the GRIN LC lens and the index-matching LC lens are arranged in a stacked configuration;
a first driving circuit configured to drive the index-matching LC lens using a first drive signal, to produce a first optical power;
a second driving circuit configured to drive the GRIN LC lens using a second drive signal, to produce at least one second optical power, wherein a combination of the at least one second optical power and the first optical power produces at least one third optical power of the hybrid LC lens; and
a controller configured to:
   generate the first drive signal for the first driving circuit, based on the first optical power that is to be produced;
   generate the second drive signal for the second driving circuit, based on the at least one second optical power that is to be produced;
   determine the at least one third optical power that is to be produced by the hybrid LC lens, wherein when determining the at least one third optical power that is to be produced by the hybrid LC lens, the controller is configured to:
      process eye-tracking data, collected by an eye-tracking means that is communicably coupled to the controller, to determine an optical depth at which a user of the hybrid LC lens is looking,; and
      select the at least one third optical power, based on the optical depth at which the user is looking;
   determine whether the at least one third optical power is equal to or greater than a maximum optical power producible by the index-matching LC lens; and
   determine the first optical power to be equal to the maximum optical power producible by the index-matching LC lens and determine the at least one second optical power to be equal to a difference between the at least one third optical power and the maximum optical power producible by the index-matching LC lens, when it is determined that the at least one third optical power is equal to or greater than the maximum optical power producible by the index-matching LC lens.

The present disclosure provides the aforementioned hybrid LC lens. In the hybrid LC lens, the index-matching LC lens and the GRIN LC lens are integrated in the stacked configuration, for effectively leveraging benefits of both these types of LC lenses while addressing their respective limitations. Upon said integration, the respective optical powers (i.e., the first optical power and the at least one second optical power) of the index-matching LC lens and the GRIN LC lens get combined, to yield a larger range for the at least one third optical power of the hybrid LC lens. Due to this larger range, the hybrid LC lens can be used in a wider variety of applications, as compared to any of its constituent LC lenses. The index-matching LC lens beneficially has a thin layer of LC material, which enables in minimizing a thickness of LC layers within the hybrid LC lens. Thus, the hybrid LC lens is thin, lightweight and compact. Such a hybrid LC lens is easy to implement in optical apparatuses. The GRIN LC lens is tunable to generate the at least one second optical power, by employing the second drive signal accordingly. Thus, the hybrid LC lens is dynamically adjustable to generate any third optical power(s) within its operating range. Moreover, the hybrid LC lens comprises the controller configured to determine the at least one third optical power based on the eye-tracking data collected from the eye-tracking means. By processing the eye-tracking data to determine the optical depth at which the user is looking , the controller is able to select an appropriate third optical power in accordance with a visual requirement of the user. This enables the hybrid LC lens to dynamically adapt its optical behaviour in response to real-time changes in user gaze or visual condition. Furthermore, by determining whether the selected third optical power is equal to or greater than the maximum optical power producible by the index-matching LC lens, the controller is able to allocate optical power generation between the index-matching LC lens and the GRIN LC lens in a controlled manner. When higher optical power is required, the index-matching LC lens is driven to its maximum optical power and the GRIN LC lens is driven to provide a remaining portion of the optical power. Such allocation enables predictable and efficient utilization of respective LC lenses according to their operational characteristics. As a result, the hybrid LC lens achieves improved controllability, reduced control complexity, and enhanced stability of optical power generation, while maintaining a compact form factor. These advantages make the hybrid LC lens particularly suitable for eye-tracked optical apparatuses such as eyeglasses, extended-reality devices, and other vision-adaptive optical systems.

In a second aspect, the present disclosure provides a method for driving a hybrid liquid crystal (LC) lens, the method comprising:
arranging an index-matching LC lens and a Gradient Refractive Index (GRIN) LC lens in a stacked configuration;
driving the index-matching LC lens using a first drive signal, for producing a first optical power;
driving the GRIN LC lens using a second drive signal, for producing at least one second optical power, wherein a combination of the at least one second optical power and the first optical power produces at least one third optical power of the hybrid LC lens;
generating the first drive signal for a first driving circuit, based on the first optical power that is to be produced;
generating the second drive signal for a second driving circuit, based on the at least one second optical power that is to be produced;
determining the at least one third optical power that is to be produced by the hybrid LC lens, by
   processing eye-tracking data, collected by an eye-tracking means, for determining an optical depth at which a user of the hybrid LC lens is looking,; and
   selecting the at least one third optical power, based on the the optical depth at which the user is looking;
determining whether the at least one third optical power is equal to or greater than a maximum optical power producible by the index-matching LC lens; and
determining the first optical power to be equal to the maximum optical power producible by the index-matching LC lens and determine the at least one second optical power to be equal to a difference between the at least one third optical power and the maximum optical power producible by the index-matching LC lens, when it is determined that the at least one third optical power is equal to or greater than the maximum optical power producible by the index-matching LC lens.

The present disclosure provides the aforementioned method for driving a hybrid LC lens. The method is simple, and easy to implement. The method enables both constituent lenses of the hybrid LC lens to be driven properly to generate their respective optical powers, so that the at least one third optical power of the hybrid LC lens is produced accurately.

In a third aspect, the present disclosure provides an optical apparatus comprising:
at least one hybrid LC lens according to the first aspect;
a frame employed to hold the at least one hybrid LC lens; and
an eye-tracking means communicably coupled to a controller of the at least one hybrid LC lens.

The present disclosure provides the aforementioned optical apparatus incorporating the hybrid LC lens of the first aspect. The optical apparatus has a simple optical configuration and securely integrates the at least one hybrid LC lens therein. The optical apparatus is compact (since the hybrid LC lens is lightweight and compact), and ergonomically designed for the users' comfort. The optical apparatus beneficially incorporates the hybrid LC lens for enabling a wide range of applications (such as viewing objects or images, imaging, addressing medical conditions of users, or similar). In this regard, the hybrid LC lens enables sharp, distortion-free, viewing with adaptive focusing, enables high-quality imaging with tunable focusing ability, enables treatment or compensation for the medical conditions, or similar. Moreover, by communicably coupling the eye-tracking means to the controller of the at least one hybrid LC lens, the optical apparatus is configured to adapt optical behaviour of the hybrid LC lens in accordance with eye-tracking data of a user. This enables the optical apparatus to dynamically adjust optical power of the hybrid LC lens based on the optical depth at which the user is looking, thereby improving viewing accuracy and visual comfort during use. Furthermore, the integration of the eye-tracking means within the optical apparatus enables the controller to determine the optical power to be produced by the hybrid LC lens in real time, without requiring manual user adjustment. As a result, the optical apparatus provides an automated and responsive optical system that adapts to changes in user gaze during operation. Additionally, since the hybrid LC lens is configured to allocate optical power generation between the index-matching LC lens and the GRIN LC lens under control of the controller, the optical apparatus achieves stable and predictable optical performance across different viewing conditions. This contributes to reliable operation of the optical apparatus in applications requiring adaptive focusing. Thus, the optical apparatus is configured to provide user-adaptive optical operation by employing the eye-tracking data to determine the optical power to be produced by the at least one hybrid LC lens during use.

Throughout the present disclosure, the term *"hybrid LC lens"* refers to a specialized LC lens that is a combination of two or more types of LC lenses. The hybrid LC lens is a complex optical element that beneficially leverages benefits of each type of LC lens amongst the two or more types of LC lenses. The hybrid LC lens described herein comprises the index-matching LC lens and the GRIN LC lens. It will be appreciated that the hybrid LC lens may optionally further comprise additional LC lens(-es), optical component(s), and the like, for incorporating additional functionalities therein.

The *"index-matching LC lens"* is an optical element which controls light passing therethrough, by leveraging properties of LC materials and an index-matching technique. In the index-matching LC lens, a refractive index of a LC material is adjustable (by adjusting an electric field applied across electrodes of the index-matching LC lens), to match a refractive index of surrounding materials of the LC material (such as a patterned substrate of the index-matching LC lens). The substrate of the index-matching lens can optionally be patterned with a suitable lens pattern to create a positive or negative lens. By matching the refractive indices of the patterned substrate and the LC material, the lens pattern can be effectively optically hidden so that the lensing effect disappears, enabling an on-off operation for a tunable index-matching LC lens.

The *"GRIN LC lens"* is an optical element which controls light passing therethrough, by leveraging properties of LC materials and a gradient refractive index profile. Liquid crystal molecules within an LC material of the GRIN LC lens are selectively rotatable to create a gradient in a refractive index of the LC material that functions as a lens. The GRIN LC lens provides a tunable focusing functionality and has a compact and lightweight design (since focusing adjustments are made electronically).

Optionally, each of the index-matching LC lens and the GRIN LC lens comprises: a plurality of substrates, an LC material encased between the plurality of substrates, and electrodes deposited on the plurality of substrates. The electrodes are powered (i.e., controlled) using drive signals, to control the electric field across the LC material. For sake of clarity, the LC material of the index-matching LC lens is hereinafter referred to as *"first LC material",* while the LC material of the GRIN LC lens is hereinafter referred to as *"second LC material".* The first LC material may be same as or different from the second LC material. Notably, when nematic liquid crystals are used in the first and second LC materials, the hybrid LC lens only works for one polarization state of light, which matches a direction of the extraordinary axis of the first and the second LC material. For polarization-free operation, two hybrid LC lenses with opposite polarizations can be arranged in a stacked configuration. Furthermore, a material of a substrate can be a glass, a polycarbonate, a plastic, a high-index plastic, or similar. Other examples of materials suitable for the substrate are well within the scope of the present disclosure.

It will be appreciated that in the index-matching LC lens, a substrate may optionally be fabricated in layers, with a corresponding electrode being arranged in-between said layers. For example, the electrode may be arranged between a first portion and a second portion of the substrate. In this regard, the electrode may be deposited on the first portion of the substrate, while the second portion of the substrate may be provided on the electrode. The electrode may not be in direct contact with the first LC material. Furthermore, a material of the first portion may be different from a material of the second portion. The layered substrate may, for example, be manufactured using nano-imprint lithography. The electrode can also be deposited on top of a lens pattern of the substrate, as a thin film.

Optionally, substrates and electrodes of the index-matching LC lens and the GRIN LC lens are at least partially optically transparent. The phrase *"at least partially optically transparent"* encompasses partial optical transparency (i.e., semi-transparency), as well as full optical transparency. As an example, optical transparency of the substrates and electrodes of the index-matching LC lens and the GRIN LC lens may lie in a range of 10% optical transparency to 100% optical transparency. According to this example, the optical transparency of the substrates and electrodes of the index-matching LC lens and the GRIN LC lens may lie from 10%, 15%, 20%, 25%, 40%, 60%, or 80% optical transparency, up to 30%, 50%, 75%, 85%, 90%, 95%, or 100% optical transparency. For several applications of the hybrid LC lens (for example, such as in eyeglasses), the hybrid LC lens is required to be a see-through optical element, and thus the at least partial optical transparency of the substrates and electrodes of the index-matching LC lens and the GRIN LC lens is beneficial.

The *"stacked configuration"* of the GRIN LC lens and the index-matching LC lens means that said lenses are arranged one on top of the other, as a single optical stack. When the hybrid LC lens is in use, the light passes through this stacked configuration of the GRIN LC lens and the index-matching LC lens. The stacked configuration of the GRIN LC lens and the index-matching LC lens achieves a larger range of optical power as compared to any one of said lenses considered individually. Optionally, the stacked configuration of the GRIN LC lens and the index-matching LC lens is implemented such that there is no air gap between the GRIN LC lens and the index-matching LC lens. The absence of air gap eliminates the possibility of unwanted reflections of light.

In an embodiment, in the stacked configuration, the index-matching LC lens and the GRIN LC lens are joined together using an adhesive whose refractive index matches a refractive index of corresponding substrates of the index-matching LC lens and the GRIN LC lens. In an embodiment, the adhesive is an optically clear liquid that is hardened by performing a curing process. The curing process could be ultraviolet curing, thermal curing, or similar. In another embodiment, the adhesive is an optically clear film of an adhesive material. A technical effect of using said adhesive is that the adhesive not only structurally integrates the index-matching LC lens and the GRIN LC lens in a stacked manner, but also minimizes undesirable boundary effects such as reflection, scattering, and the like, of light, due to refractive index matching between the adhesive and the corresponding substrates.

In another embodiment, in the stacked configuration, the index-matching LC lens and the GRIN LC lens are fabricated on opposite sides of a common substrate. In this regard, the common substrate serves as a substrate that is a part of both the index-matching LC lens and the GRIN LC lens. The common substrate is arranged in a middle of the stacked configuration. The fabrication of the index-matching LC lens and the GRIN LC lens on the opposite sides of the common substrate is performed using well-known fabrication techniques. A technical effect of such an implementation of the stacked configuration incorporating the common substrate is that it enables the hybrid LC lens to be thin and compact in terms of design.

The term *"driving circuit"* refers to electronic circuitry (including electronic devices, components, electrical connections, and the like) that generates and controls an electric field that is applied to an LC lens. Changes in the electric field manipulate an orientation of LC molecules within a LC material of the LC lens, which resultantly changes optical properties of the LC lens. The first driving circuit and the second driving circuit play a key role in the performance of the index-matching LC lens and the GRIN LC lens, respectively, by enabling precise control over their operation. It will be appreciated that the first driving circuit and the second driving circuit may generate the first drive signal and the second drive signal, respectively, on their own, or such drive signals may be received by them from a controller. The controller could be a part of the hybrid LC lens or its constituent LC lenses or may be an external controller to which the hybrid LC lens is attached in use.

The first drive signal produces a first effective voltage across the electrodes of the index-matching LC lens, which produces the first optical power. The first optical power could be a positive optical power, a negative optical power, or a zero optical power.

The second drive signal produces at least one second effective voltage across the electrodes of the GRIN LC lens (since the GRIN LC lens can have a variable refractive index profile), which produces the at least one second optical power. The at least one second optical power could comprise at least one of: a positive optical power, a negative optical power, a zero optical power.

Optionally, a given drive signal (i.e., the first drive signal and/or the second drive signal) comprises voltage signals. These voltage signals collectively produce one or more effective voltages across the electrodes of a given LC lens (i.e., the index-matching LC lens and/or the GRIN LC lens). It will be appreciated that a shape of a waveform of the given drive signal may be square, sinusoidal, pulse, sawtooth, or similar, while a frequency of the given drive signal may range from a few hertz (Hz) up to several megahertz (MHz).

The at least one third optical power of the hybrid LC lens is produced upon the combination of the first optical power and the at least one second optical power. Said combination occurs due to the stacked configuration of the index-matching LC lens and the GRIN LC lens. In other words, optical powers of the index-matching LC lens and the GRIN LC lens are effectively summed up together to beneficially achieve a large optical power range of the hybrid LC lens. Moreover, this large optical power range is achieved by keeping a thickness of LC material layers (in said lenses) as thin as possible.

As an example, the first optical power of the index-matching LC lens could be 0 dioptres (D) when the index-matching LC lens is switched OFF or 1.5 D when the index-matching LC lens is switched ON, while the at least one second optical power of the GRIN LC lens could lie in a range of 0 D to 1.5 D. When these LC lenses are arranged in the stacked configuration in the hybrid LC lens, the at least one third optical power of the hybrid LC lens lies in a range of 0 D to 3 D. In particular, when the first optical power is 0 D, the at least one third optical power that can be produced ranges from 0 D to 1.5 D, whereas when the first optical power is 1.5 D, the at least one third optical power that can be produced ranges from 1.5 D to 3 D. In one instance, the first optical power may be 0 D, while the at least one second optical power may be 0.5 D, thus producing the at least one third optical power of 0.5 D. In another instance, the first optical power may be 1.5 D, while the at least one second optical power may be 0.25 D, thus producing the at least one third optical power of 1.75 D. It will be appreciated that various values of the at least one third power may be realised in a similar manner.

As another example, the first optical power of the index-matching LC lens could be 0 D or 2 D, while the at least one second optical power of the GRIN LC lens could lie in a range of -1 D to 1 D. When the index-matching LC lens is switched ON, the first optical power would be 2 D and the at least one third optical power of the hybrid LC lens would lie in a range of 1 D to 3 D. In this case, any third optical power under 2 D (i.e., ranging from 1 D to less than 2 D) can be achieved by creating a negative second optical power in the GRIN LC lens. Alternatively, when the index-matching LC lens is switched OFF, the first optical power would be 0 D and the at least one third optical power of the hybrid LC lens would lie in a range of -1 D to 1 D. In this case, any third optical power that is negative (i.e., ranging from -1 D to less than 0 D) can be achieved by creating a negative second optical power in the GRIN LC lens. This mixed optical power implementation of the hybrid LC lens is possible because the GRIN LC lens is versatile, and it can be made to work for negative and positive powers equally well. Such a configuration of the hybrid LC lens can be useful, for example, in camera lenses.

Throughout the present disclosure, the controller is a part of the hybrid LC lens and controls an overall operation of the hybrid LC lens. The first and second optical powers to be produced are pre-known or provided to the controller. The controller generates the first drive signal and the second drive signal, according to the first optical power and the at least one second optical power, respectively, so that a requisite optical effect corresponding to the at least one third optical power of the hybrid LC lens, can be accurately produced. By integrating the controller in the hybrid LC less, a latency in providing the first and second drive signals to their respective LC lenses is reduced, thus enabling a fast response time for the hybrid LC lens.

Throughout the present disclosure, the controller accurately controls how the index-matching LC lens and the GRIN LC lens are to be controlled to produce their respective optical powers, depending on the at least one third optical power that is to be produced by the hybrid LC lens. The at least one third optical power may be determined in several ways, for example, based on an input provided by a user, based on processing of data by the controller or by an external device, or similar. In this regard, the controller processes the eye-tracking data to determine the at least one third optical power that is to be produced by the hybrid LC lens. The eye-tracking data is indicative of gaze directions of the user's eyes. The optical depth at which the user is looking is determined based on a convergence of the gaze directions of the user's eyes. The user may look (i.e., focus) at various optical depths while using the hybrid LC lens, wherein such optical depths typically range from 5 centimetres to infinity.. Therefore, the at least one third optical power is selected so that the user can properly focus at the optical depth at which the user is looking.. It will be appreciated that the controller performs the aforementioned steps to accurately address depth-focusing requirementsof the user of the hybrid LC lens.

As an example, the eye-tracking data may be processed to determine that the user is looking at an object that is placed at an optical depth (Dist) of 0.9 metres from the user. Using the formula P = 1/Dist, where P is optical power, P is determined to be 1.11 D (i.e., equal to 1/0.9). Thus, the third optical power is selected to be 1.11 D.

It will be appreciated that in some embodiments, the index-matching LC lens may be realized as a Fresnel lens, to limit a thickness of a layer of the first LC material. In these embodiments, the first optical power of the index-matching LC lens is created at an interface between the first LC material and the substrate, so the layer of the first LC material can be quite thin. Optionally, the thickness of the layer of the first LC material lies in a range of 1 micrometre to 50 micrometres. For example, the thickness of the layer of the first LC material may be from 1, 2, 3, 5, 7, 10, 15, 20, 25, or 40 micrometres up to 12, 22, 30, 35, 40, 45, 48, 50 micrometres. In another example, the layer of the first LC material may be 10 micrometres or less. In such embodiments, the first optical power is not determined by the thickness of the layer of the first LC material. Limiting the thickness of the layer of the first LC material, would in turn enable a thin design of the index-matching LC lens and the hybrid LC lens.

Notably, the index-matching LC lens is capable of producing two discrete first optical powers: a zero optical power (in the index-matched state where it is switched OFF), or its maximum optical power (in a state of maximum index-mismatch where it is switched ON). This maximum optical power is pre-known to the controller, and could be either a positive optical power or a negative optical power. When it is determined that the at least one third optical power is equal to or greater than the maximum optical power producible by the index-matching LC lens, it means that the hybrid LC lens has to produce high optical power(s). Therefore, in this case, the index-matching LC lens should be switched ON to produce said maximum optical power as its contribution towards producing the at least one third optical power, and thus the first optical power is determined to be equal to the maximum optical power. A remaining contribution of optical power towards producing the at least one third optical power would then come from the GRIN LC lens which is tunable, and thus the at least one second optical power is determined to be equal to the difference between the at least one third optical power and the maximum optical power producible by the index-matching LC lens. This difference could be zero or non-zero. It will be appreciated that such a manner of producing the at least one third optical power is simple, easy to implement, and effectively produces the high optical power(s) in the hybrid LC lens. In this manner, the aforesaid approach defines a structured allocation of optical power generation between the index-matching LC lens and the GRIN LC lens based on the determined at least one third optical power, rather than relying on independent or parallel driving of the respective LC lenses. This structured allocation enables controlled operation of the hybrid LC lens in response to the eye-tracking data. A technical effect of the aforesaid approach is that the hybrid LC lens enables adaptive generation of the at least one third optical power in response to the eye-tracking data of the user.

As an example, a third optical power of 2.5 D is to be produced by the hybrid LC lens. The third optical power is determined to be greater than a maximum optical power of 1.5 D producible by the index-matching LC lens. In this case, the first optical power is determined to be 1.5 D, while a second optical power is determined to be 1 D (i.e., 2.5 D minus 1.5 D), for collectively producing the third optical power of 2.5 D.

Optionally, the controller is further configured to determine the first optical power to be equal to zero and determine the at least one second optical power to be equal to the at least one third optical power, when it is determined that the at least one third optical power is lesser than the maximum optical power producible by the index-matching LC lens. In this case, the index-matching LC lens should be switched OFF to prevent production of said maximum optical power, and thus the first optical power is determined to be equal to zero optical power. An entire contribution of optical power in the at least one third optical power would in this case come from the GRIN LC lens, which is tunable, and thus the at least one second optical power is determined to be equal to the at least one third optical power. It will be appreciated that such a manner of producing the at least one third optical power is simple, easy to implement, and effectively produces low optical power(s) in the hybrid LC lens.

As an example, a third optical power of 1.3 D is to be produced by the hybrid LC lens. The third optical power is determined to be lesser than a maximum optical power of 1.5 D producible by the index-matching LC lens. The GRIN LC lens may be tunable to produce second optical power(s) in a range of 0 D to 3 D. In this case, the first optical power is determined to be 0 D, while a second optical power is determined to be 1.3 D for producing the third optical power of 1.3 D.

Optionally, at least one substrate of the index-matching LC lens has a Fresnel pattern thereon, the Fresnel pattern being one of: a convex Fresnel pattern, a concave Fresnel pattern. In other words, a surface of the at least one substrate is shaped or structured into a specific pattern that mimics optical properties of a traditional convex or concave lens, but in a much thinner and lighter form, wherein this specific pattern consists of concentric grooves or ridges that approximate a curvature of traditional lenses. Notably, the grooves or ridges of the Fresnel pattern face the first LC material. The Fresnel pattern provides a baseline focusing power according to a curvature thereof, while the first LC material allows for fine-tuning or dynamic control of that focus. The *"convex Fresnel pattern"* refers to a lens design where grooves or ridges of a Fresnel structure in the at least one substrate create a convex lens profile, causing the light to converge in use. Similarly, the *"concave Fresnel pattern"* refers to a lens design where grooves or ridges of a Fresnel structure in the at least one substrate create a concave lens profile, causing the light to diverge in use. A technical effect of realizing the index-matching LC lens a LC lens with the Fresnel pattern is that the Fresnel pattern enables a thinner and lighter design of the index-matching LC lens for producing the first optical power, as compared to traditional lenses.

Alternatively, optionally, the index-matching LC lens may be realized without the Fresnel pattern. In this case, however, for the index-matching LC lenses with large diameters (greater than few millimetres), a thick layer of the LC material may be required due to a thick requirement of physical lens design. The thick layer of the LC material could result in larger haze and slower operation, eventually, eventually making such index-matching LC lenses unusable. Some embodiments wherein the at least one substrate of the index-matching LC lens has the Fresnel pattern thereon, as discussed hereinbelow.

In an embodiment, when the Fresnel pattern is the convex Fresnel pattern and the first optical power to be produced is a positive optical power, the first drive signal applies a non-zero effective voltage across electrodes of the index-matching LC lens to create a refractive index difference wherein a refractive index of the at least one substrate having the convex Fresnel pattern is greater than a refractive index of a LC material of the index-matching LC lens. In this embodiment, the convex Fresnel pattern provides a baseline converging effect (i.e., an inherent focusing effect) for producing the positive optical power. When the non-zero effective voltage is applied across the electrodes of the index-matching LC lens, LC molecules in the first LC material get reoriented in a manner that said refractive index difference is created. As an example, the LC molecules become perpendicular to a surface of a substrate which has the convex Fresnel pattern thereon. When any refractive index difference is created in the index-matching LC lens, a material with higher refractive index tends to dominate optical properties of said lens due to its relatively stronger impact on bending of light. Thus, upon creation of said refractive index difference, the convex Fresnel pattern produces the positive optical power. Alternatively, in this configuration of the index-matching LC lens having the convex Fresnel pattern, when the first optical power to be produced is a zero optical power, the first drive signal applies a zero effective voltage across the electrodes of the index-matching LC lens to match the refractive index of the at least one substrate having the convex Fresnel pattern with the refractive index of the first LC material.

In another embodiment, when the Fresnel pattern is the concave Fresnel pattern and the first optical power to be produced is a positive optical power, the first drive signal applies a zero effective voltage across electrodes of the index-matching LC lens to create a refractive index difference wherein a refractive index of the at least one substrate having the concave Fresnel pattern is lesser than a refractive index of a LC material of the index-matching LC lens. In this embodiment, the concave Fresnel pattern provides a baseline diverging effect for producing a negative optical power. When the zero effective voltage is applied across the electrodes of the index-matching LC lens, LC molecules in the first LC material get reoriented in a manner that said refractive index difference is created. As an example, the LC molecules become parallel to a surface of a substrate which has the concave Fresnel pattern thereon. When any refractive index difference is created in the index-matching LC lens, a material with higher refractive index tends to dominate optical properties of said lens due to its relatively stronger impact on bending of light. Thus, upon creation of said refractive index difference, the first LC material having a convex profile (complementary to the concave Fresnel pattern) produces the positive optical power. A technical effect of this implementation is that the positive optical power is producible, despite the diverging effect of the concave Fresnel pattern in the index-matching LC lens. Alternatively, in this configuration of the index-matching LC lens having the concave Fresnel pattern, when the first optical power to be produced is a zero optical power, the first drive signal applies a non-zero effective voltage across the electrodes of the index-matching LC lens to match the refractive index of the at least one substrate having the concave Fresnel pattern with the refractive index of the first LC material.

In yet another embodiment, when the Fresnel pattern is the convex Fresnel pattern and the first optical power to be produced is a negative optical power, the first drive signal applies a zero effective voltage across electrodes of the index-matching LC lens to create a refractive index difference wherein a refractive index of the at least one substrate having the convex Fresnel pattern is lesser than a refractive index of a LC material of the index-matching LC lens. In this embodiment, the convex Fresnel pattern provides a baseline converging effect for producing a positive optical power. When the zero effective voltage is applied across the electrodes of the index-matching LC lens, LC molecules in the first LC material get reoriented in a manner that said refractive index difference is created. As an example, the LC molecules become parallel to a surface of a substrate which has the convex Fresnel pattern thereon. When any refractive index difference is created in the index-matching LC lens, a material with higher refractive index tends to dominate optical properties of said lens due to its relatively stronger impact on bending of light. Thus, upon creation of said refractive index difference, the first LC material having a concave profile (complementary to the convex Fresnel pattern) produces the negative optical power. A technical effect of this implementation is that the negative optical power is producible, despite the converging effect of the convex Fresnel pattern in the index-matching LC lens. Alternatively, in this configuration of the index-matching LC lens having the convex Fresnel pattern, when the first optical power to be produced is a zero optical power, the first drive signal applies a non-zero effective voltage across the electrodes of the index-matching LC lens to match the refractive index of the at least one substrate having the convex Fresnel pattern with the refractive index of the first LC material.

In still another embodiment, when the Fresnel pattern is the concave Fresnel pattern and the first optical power to be produced is a negative optical power, the first drive signal applies a non-zero effective voltage across electrodes of the index-matching LC lens to create a refractive index difference wherein a refractive index of the at least one substrate having the concave Fresnel pattern is greater than a refractive index of a LC material of the index-matching LC lens. In this embodiment, the concave Fresnel pattern provides a baseline diverging effect for producing the negative optical power. When the non-zero effective voltage is applied across the electrodes of the index-matching LC lens, LC molecules in the first LC material get reoriented in a manner that said refractive index difference is created. As an example, the LC molecules become perpendicular to a surface of a substrate which has the Fresnel pattern thereon. When any refractive index difference is created in the index-matching LC lens, a material with higher refractive index tends to dominate optical properties of said lens due to its relatively stronger impact on bending of light. Thus, upon creation of said refractive index difference, the concave Fresnel pattern produces the negative optical power. Alternatively, in this configuration of the index-matching LC lens having the concave Fresnel pattern, when the first optical power to be produced is a zero optical power, the first drive signal applies a zero effective voltage across the electrodes of the index-matching LC lens to match the refractive index of the at least one substrate having the concave Fresnel pattern with the refractive index of the first LC material.

The present disclosure also relates to the method as described above. Various embodiments and variants disclosed above, with respect to the aforementioned hybrid LC lens, apply mutatis mutandis to the method.

It will be appreciated that in the method, the steps of driving the index-matching LC lens and driving the GRIN LC lens may be implemented in simultaneously (i.e., concurrently), or with negligible time interval therebetween, or the step of driving the GRIN LC lens may be implemented prior to the step of driving the index-matching LC lens.

In the method, the step of arranging the index-matching LC lens and the GRIN LC lens in the stacked configuration may be implemented using any suitable manufacturing technique. In an embodiment, said step of arranging comprises joining the index-matching LC lens and the GRIN LC lens together using the adhesive whose refractive index matches a refractive index of corresponding substrates of the index-matching LC lens and the GRIN LC lens. In another embodiment, said step of arranging comprises fabricating the index-matching LC lens and the GRIN LC lens on opposite sides of the common substrate. A technical effect of the aforesaid approach is that the method enables controlled driving of the hybrid LC lens to generate the at least one third optical power in response to the eye-tracking data of the user. It will be appreciated that by processing the eye-tracking data to determine the optical depth at which the user of the hybrid LC lens is looking, and selecting the at least one third optical power accordingly, the method supports user-adaptive optical power generation during operation. Further, by determining whether the at least one third optical power is equal to or greater than the maximum optical power producible by the index-matching LC lens and setting the first optical power and the at least one second optical power based thereon, the method provides predictable allocation of optical power contributions between the index-matching LC lens and the GRIN LC lens. Consequently, the method facilitates reliable implementation of eye-tracked adaptive focusing while coordinating operation of stacked LC lenses within their operating range.

The present disclosure also relates to the optical apparatus as described above. Various embodiments and variants disclosed above, with respect to the aforementioned hybrid LC lens and the method, apply mutatis mutandis to the optical apparatus.

In some implementations, the optical apparatus comprises a single hybrid LC lens, whereas in other implementations, the optical apparatus comprises a plurality of hybrid LC lenses. The frame of the optical apparatus is designed in a manner that the at least one hybrid LC lens is firmly arranged in the frame. It will be appreciated that a material of the frame could be plastic, metal, polymer, and the like. Moreover, the frame may be lightweight, ergonomically designed, and easy to use.

Optionally, the optical apparatus further comprises at least one processor, wherein the at least one processor serves as the controller of the at least one hybrid LC lens.

Throughout the present disclosure, the term *"eye-tracking means"* refers to the specialized equipment for detecting and/or following gaze of the user's eyes, when the optical apparatus is in use (namely, is worn by the user). Optionally, the eye-tracking means is implemented as one of: contact lenses with sensors, cameras monitoring features of the user's eyes. features of the user's eye, and the like. Such features may comprise at least one of: a shape of a pupil of the user's eyes, a size of the pupil, corneal reflections of at least one light source from a surface of the user's eye, a relative position of the pupil with respect to the corneal reflections, a relative position of the pupil with respect to the corneal reflections, a relative position of the pupil with respect to corners of the user's eye. Such eye-tracking means are well-known in the art. It will be appreciated that the eye-tracking data is collected repeatedly by the eye-tracking means throughout a given session of using the optical apparatus, as gaze of the user's eyes keeps changing whilst he/she uses the optical apparatus. Optionally, when processing the eye-tracking data, the controller is configured to employ at least one of: an image processing algorithm, a feature extraction algorithm, a data processing algorithm.

A technical effect of the aforesaid approach is that the optical apparatus provides user-adaptive optical operation by employing the eye-tracking means to supply the eye-tracking data to the controller of the at least one hybrid LC lens. It will be appreciated that by enabling the controller to determine and select the optical power to be produced by the at least one hybrid LC lens based on user viewing behaviour, the optical apparatus supports dynamic adjustment of optical performance during use. Further, since the at least one hybrid LC lens is held securely within the frame, the optical apparatus maintains a compact and stable configuration while incorporating the eye-tracking based control. Consequently, the optical apparatus facilitates reliable implementation of eye-tracked adaptive focusing in a single integrated optical system.

Optionally, the optical apparatus is one of: a pair of eyeglasses, a head-mounted extended-reality (XR) device, a camera. The at least one hybrid LC lens allows for adjusting focal length and dynamic focusing, which provides realism and immersion in viewing applications involving the pair of eyeglasses and the head-mounted XR device, while providing sharpness and clarity in imaging applications involving the camera. The design of the hybrid LC lens minimizes chromatic and spherical aberrations, providing visual comfort and clarity, and producing sharper, clearer images with less distortion. Furthermore, the lightweight and compact implementation of the at least one hybrid LC lens reduces bulk and weight of wearable apparatuses such as the pair of eyeglasses and the head-mounted XR devices, improving user comfort and usability. With respect to cameras, the at least one hybrid LC lens that is light and thin enables the camera to be easy to handle, especially when mounted on mobile devices, vehicles, or drones.

### DETAILED DESCRIPTION OF THE DRAWINGS

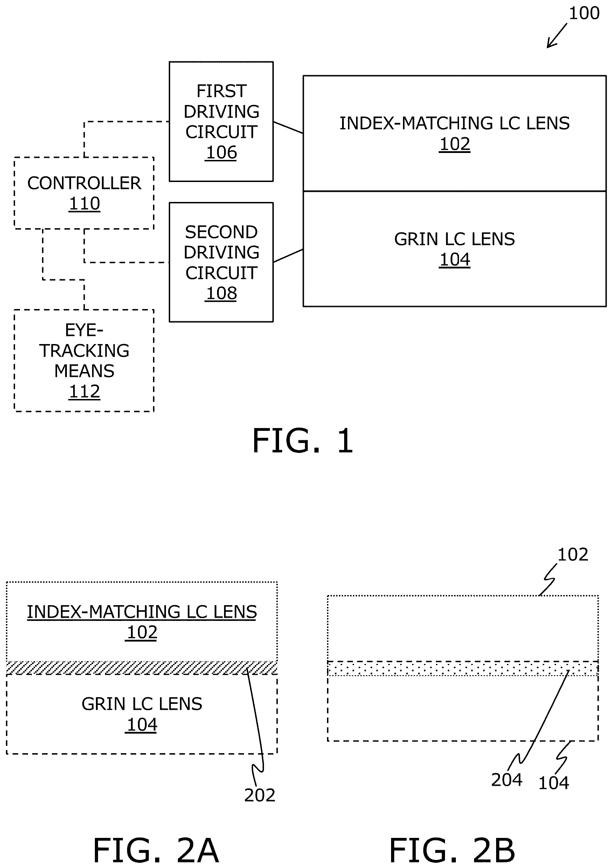

Referring to FIG. 1, illustrated is a simplified block diagram of a hybrid liquid crystal (LC) lens **100,** in accordance with at least one embodiment of the present disclosure. The hybrid LC lens **100** comprises an index-matching LC lens **102,** a Gradient Refractive Index (GRIN) LC lens **104,** a first driving circuit **106,** a second driving circuit **108,** and a controller **110.** The GRIN LC lens **104** and the index-matching LC lens **102** are arranged in a stacked configuration. The first driving circuit **106** is configured to drive the index-matching LC lens **102** using a first drive signal, to produce a first optical power. The second driving circuit **108** is configured to drive the GRIN LC lens **104** using a second drive signal, to produce at least one second optical power, wherein a combination of the at least one second optical power and the first optical power produces at least one third optical power of the hybrid LC lens **100.**

Herein, the controller **110** is configured to generate the first drive signal for the first driving circuit **106,** based on the first optical power that is to be produced. Next, the controller **110** is configured to generate the second drive signal for the second driving circuit **108,** based on the at least one second optical power that is to be produced. Next, the controller **110** is configured to determine the at least one third optical power that is to be produced by the hybrid LC lens **100,** wherein when determining the at least one third optical power that is to be produced by the hybrid LC lens **100,** said controller **110** is configured to: process eye-tracking data, collected by an eye-tracking means **112** that is communicably coupled to the controller **110,** to determine an optical depth at which a user of the hybrid LC lens **100** is looking, and select the at least one third optical power, based on the optical depth at which the user is looking. Next, the controller **110** is configured to determine whether the at least one third optical power is equal to or greater than a maximum optical power producible by the index-matching LC lens **102.** Then, the controller **110** is configured to determine the first optical power to be equal to the maximum optical power producible by the index-matching LC lens **102** and determine the at least one second optical power to be equal to a difference between the at least one third optical power and the maximum optical power producible by the index-matching LC lens **102,** when it is determined that the at least one third optical power is equal to or greater than the maximum optical power producible by the index-matching LC lens **102.**

It may be understood by a person skilled in the art that the FIG. 1 includes a simplified block diagram of the hybrid LC lens **100** for sake of clarity, which should not unduly limit the scope of the claims herein. The person skilled in the art will recognize many variations, alternatives, and modifications of embodiments of the present disclosure

Referring to FIGs. 2A and 2B, illustrated are exemplary implementations of a stacked configuration of the index-matching LC lens **102** (depicted using a dotted outline) and the Gradient Refractive Index (GRIN) LC lens **104** (depicted using a dashed outline), in the hybrid LC lens **100,** in accordance with different embodiments of the present disclosure. In FIG. 2A, the index-matching LC lens **102** and the GRIN LC lens **104** are joined together using an adhesive **202** (depicted using a slanted-hatched portion) whose refractive index matches a refractive index of corresponding substrates of the index-matching LC lens **102** and the GRIN LC lens **104.** In FIG. 2B, the index-matching LC lens **102** and the GRIN LC lens **104** are fabricated on opposite sides of a common substrate **204** (shown as a dotted-hatched portion).

It may be understood by a person skilled in the art that the FIGs. 2A and 2B are merely examples for sake of clarity, which should not unduly limit the scope of the claims herein. The person skilled in the art will recognize many variations, alternatives, and modifications of embodiments of the present disclosure.

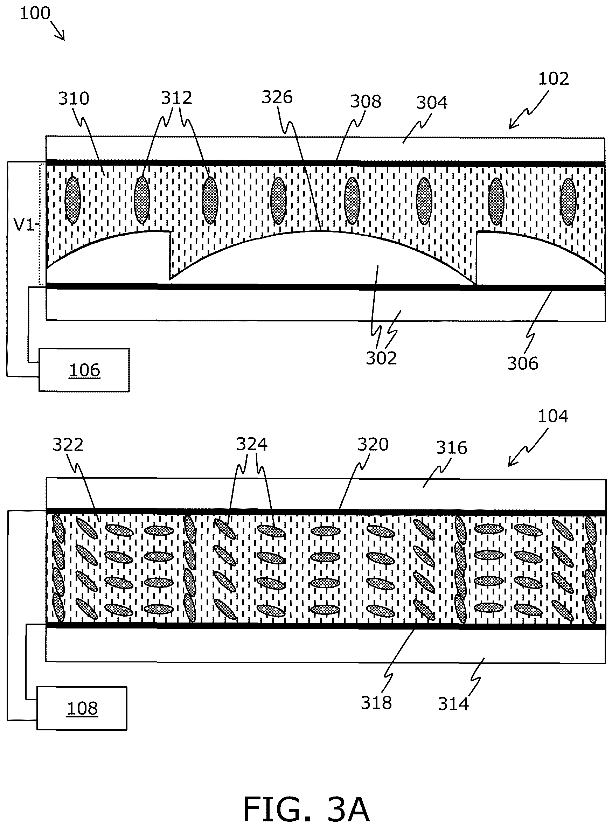

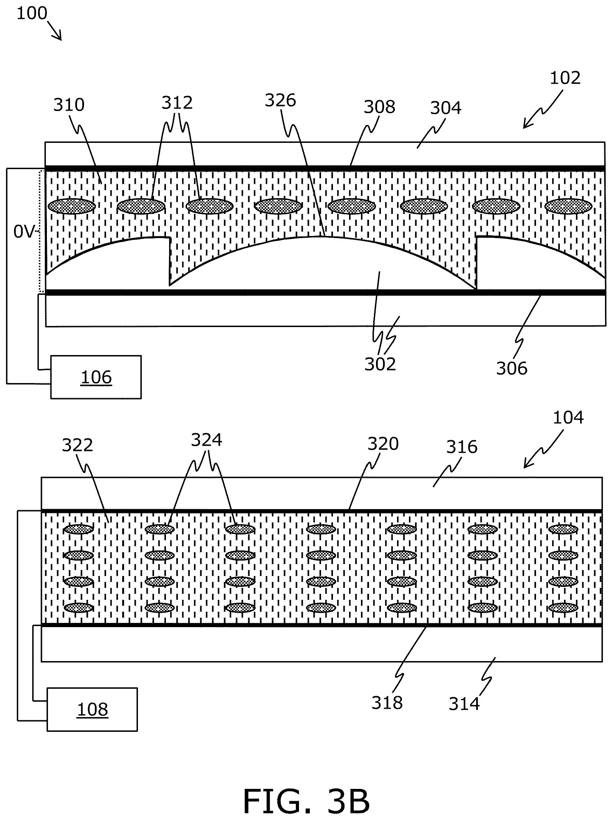

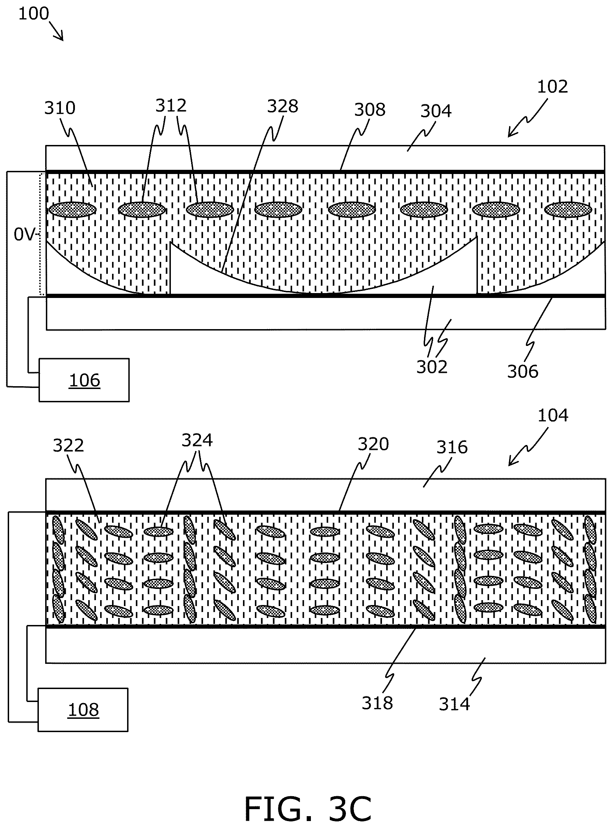

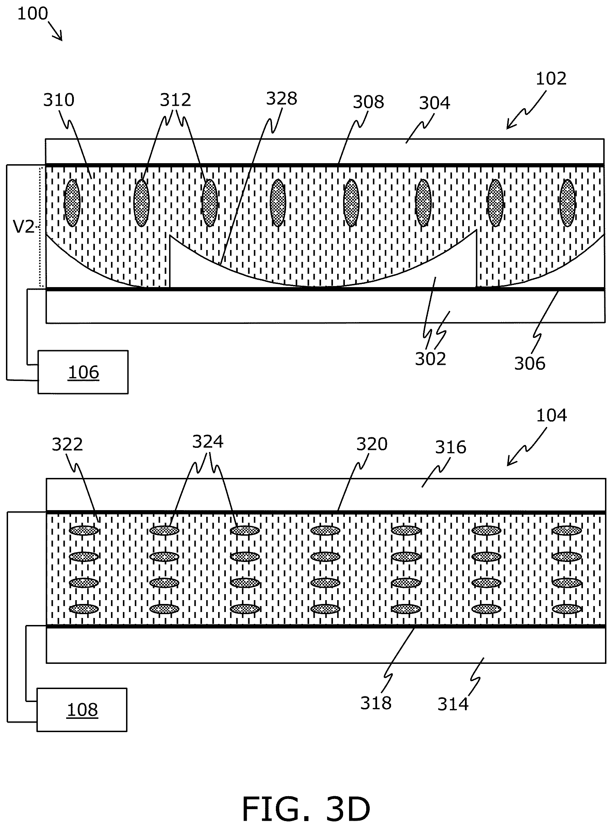

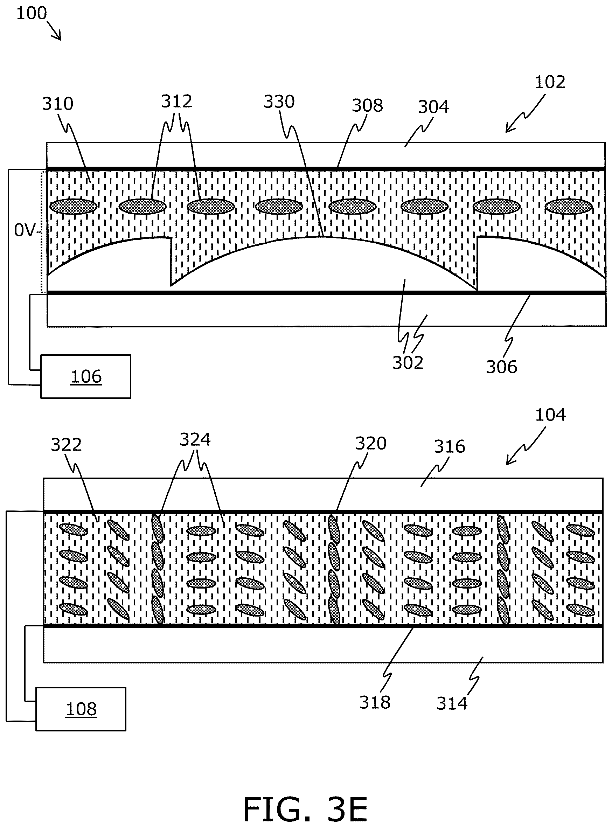

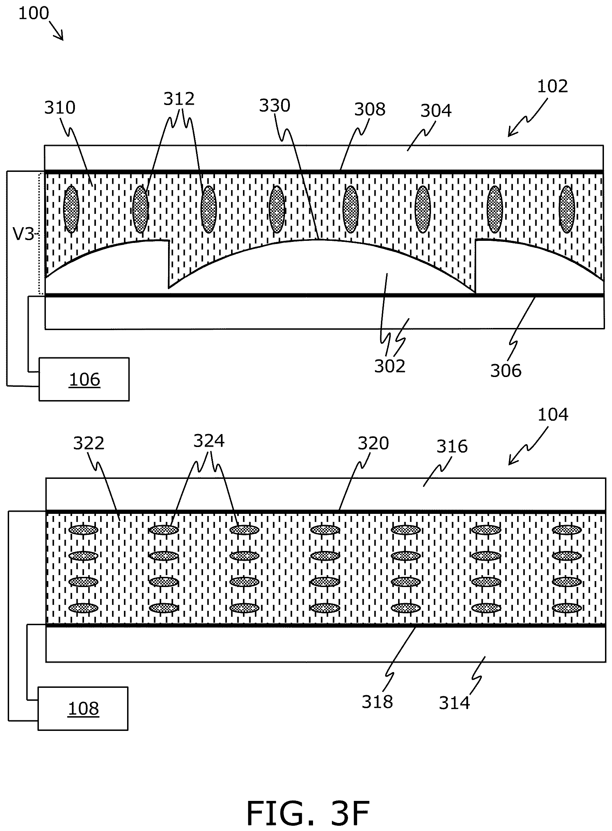

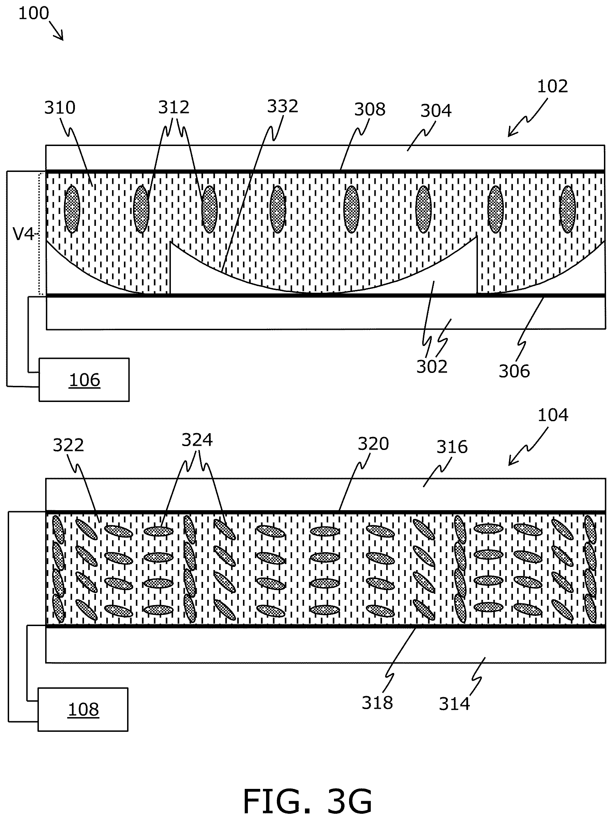

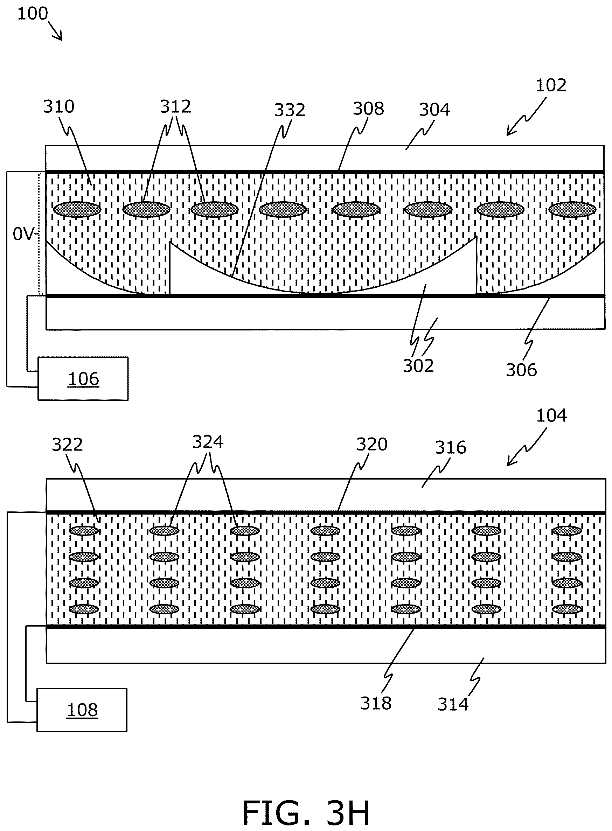

Referring to FIGs. 3A, 3B, 3C, 3D, 3E, 3F, 3G, and 3H, there are shown various implementations of the hybrid LC lens **100,** in accordance with various embodiments of the present disclosure. For sake of simplicity and clarity, constituent elements of the hybrid lens **100** which are common to all these embodiments are discussed in this paragraph. The hybrid LC lens **100** comprises the index-matching LC lens **102,** the GRIN LC lens **104,** the first driving circuit **106,** and the second driving circuit **108.** It will be appreciated that the index-matching LC lens **102** and the GRIN LC lens **104** are shown to be spaced apart from each other only for sake of clearly illustrating their constituent elements. In use, the index-matching LC lens **102** and the GRIN LC lens **104** would be arranged in a stacked configuration (for example, such as shown in FIG. 2A or FIG. 2B). The index-matching LC lens **102** is shown to comprise substrates **302** and **304,** electrodes **306** and **308,** and a LC material **310** comprising LC molecules **312.** The electrode **306** is deposited on the substrate **302,** while the electrode **308** is deposited on the substrate **304** and is disposed between the substrate **304** and the LC material **310.** Furthermore, the GRIN LC lens **104** is shown to comprise substrates **314** and **316,** electrodes **318** and **320,** and a LC material **322** comprising LC molecules **324.** The electrode **318** is deposited on the substrate **314** and is disposed between the substrate **314** and the LC material **322,** while the electrode **320** is deposited on the substrate **316** and is disposed between the substrate **316** and the LC material **322.** In operation, the index-matching LC lens **102** is driven by the first driving circuit **106,** while the GRIN LC lens **104** is driven by the second driving circuit **108.**

Now referring to FIGs. 3A and 3B, illustrated is an exemplary implementation of the hybrid LC lens **100** wherein the substrate **302** of the index-matching LC lens **102** has a convex Fresnel pattern **326** thereon, for producing positive and zero first optical powers, respectively, in accordance with an embodiment of the present disclosure. In FIG. 3A, the first optical power to be produced is a positive optical power, while in FIG. 3B, the first optical power to be produced is a zero optical power.

In FIG. 3A, the index-matching LC lens **102** is switched ON, using a first drive signal provided by the first driving circuit **106.** For example, an effective voltage of **V1** volts (**V1** being non-zero) may be created across the electrodes **306** and **308** of the index-matching LC lens **102,** by the first drive signal. This effective voltage causes the LC molecules **312** to rotate and become perpendicular to a surface of the substrate **302** which has the convex Fresnel pattern **326** thereon, for creating a refractive index difference between the substrate **302** and the LC material **310.** In this regard, a refractive index of the substrate **302** may be 1.8 and a refractive index of the LC material **310** may become 1.5. As a result of creation of the refractive index difference and the convex Fresnel pattern **326,** a positive lens (i.e., a converging lens) having the positive optical power is produced. Furthermore, as shown for example, the GRIN LC lens **104** is also switched ON, using a second drive signal provided by the second driving circuit **108.** The second drive signal selectively rotates the LC molecules **324** to create a gradient in refractive index of the LC material **322,** that functions as a lens.

In FIG. 3B, the index-matching LC lens **102** is switched OFF, using the first drive signal. For example, an effective voltage of zero volts (**0V**) may be created across the electrodes **306** and **308** of the index-matching LC lens **102,** by the first drive signal. This effective voltage causes the LC molecules **312** to rotate and become parallel to a surface of the substrate **302** which has the convex Fresnel pattern **326** thereon, for matching the refractive indexes of the substrate **302** and the LC material **310.** In this regard, the refractive index of both the substrate **302** and the refractive index of the LC material **310** are equal, for example 1.8. As a result of the refractive indexes matching, the convex Fresnel pattern **326** gets hidden, and a lens having the zero optical power is produced. Furthermore, as shown for example, the GRIN LC lens **104** is also switched OFF, using the second drive signal, which aligns the LC molecules **324** in a homogenous orientation.

Now referring to FIGs. 3C and 3D, illustrated is an exemplary implementation of the hybrid LC lens **100** wherein the substrate **302** of the index-matching LC lens **102** has a concave Fresnel pattern **328** thereon, for producing positive and zero first optical powers, respectively, in accordance with another embodiment of the present disclosure. In FIG. 3C, the first optical power to be produced is a positive optical power, while in FIG. 3D, the first optical power to be produced is a zero optical power.

In FIG. 3C, the index-matching LC lens **102** is switched ON, using the first drive signal. For example, an effective voltage of zero volts (**0V**) may be created across the electrodes **306** and **308** of the index-matching LC lens **102,** by the first drive signal. This effective voltage causes the LC molecules **312** to rotate and become parallel to a surface of the substrate **302** which has the concave Fresnel pattern **328** thereon, for creating a refractive index difference between the substrate **302** and the LC material **310.** In this regard, a refractive index of the substrate **302** may be 1.5 and a refractive index of the LC material **310** may be 1.8. As a result of creation of the refractive index difference and the concave Fresnel pattern **328,** a positive lens (i.e., a converging lens) having the positive optical power is produced. In particular, the positive lens is produced despite the concave Fresnel pattern **328,** as the refractive index of the LC material **310** is higher than refractive index of the substrate **302,** and the LC material **310** has a convex profile that is complementary to the concave Fresnel pattern **328.** Furthermore, as shown for example, the GRIN LC lens **104** is also switched ON, using the second drive signal, which selectively rotates the LC molecules **324** to create a gradient in refractive index of the LC material **322,** that functions as a lens.

In FIG. 3D, the index-matching LC lens **102** is switched OFF, using the first drive signal. For example, an effective voltage of **V2** volts (**V2** being non-zero) may be created across the electrodes **306** and **308** of the index-matching LC lens **102,** by the first drive signal. This effective voltage causes the LC molecules **312** to rotate and become perpendicular to a surface of the substrate **302** which has the concave Fresnel pattern **328** thereon, for matching the refractive indexes of the substrate **302** and the LC material **310.** In this regard, the refractive index of the substrate **302** and the refractive index of the LC material **310** are equal, for example 1.5. As a result of the refractive indexes matching, the concave Fresnel pattern **328** gets hidden, and a lens having the zero optical power is produced. Furthermore, as shown for example, the GRIN LC lens **104** is also switched OFF, using the second drive signal, which aligns the LC molecules **324** in a homogenous orientation.

Now referring to FIGs. 3E and 3F, illustrated is an exemplary implementation of the hybrid LC lens **100** wherein the substrate **302** of the index-matching LC lens **102** has a convex Fresnel pattern **330** thereon, for producing negative and zero first optical powers, respectively, in accordance with an embodiment of the present disclosure. In FIG. 3E, the first optical power to be produced is a negative optical power, while in FIG. 3F, the first optical power to be produced is a zero optical power.

In FIG. 3E, the index-matching LC lens **102** is switched ON, using the first drive signal. For example, an effective voltage of zero volts (**0V**) may be created across the electrodes **306** and **308** of the index-matching LC lens **102,** by the first drive signal. This effective voltage causes the LC molecules **312** to rotate and become parallel to a surface of the substrate **302** which has the convex Fresnel pattern **330** thereon, for creating a refractive index difference between the substrate **302** and the LC material **310.** In this regard, a refractive index of the substrate **302** may be 1.5 and a refractive index of the LC material **310** may be 1.8. As a result of creation of the refractive index difference and the convex Fresnel pattern **330,** a negative lens (i.e., a diverging lens) having the negative optical power is produced. In particular, the negative lens is produced despite the convex Fresnel pattern **330,** as the refractive index of the LC material **310** is higher than refractive index of the substrate **302,** and the LC material **310** has a concave profile that is complementary to the convex Fresnel pattern **330.** Furthermore, as shown for example, the GRIN LC lens **104** is also switched ON, using the second drive signal, which selectively rotates the LC molecules **324** to create a gradient in refractive index of the LC material **322,** that functions as a lens.

In FIG. 3F, the index-matching LC lens **102** is switched OFF, using the first drive signal. For example, an effective voltage of **V3** volts (**V3** being non-zero) may be created across the electrodes **306** and **308** of the index-matching LC lens **102,** by the first drive signal. This effective voltage causes the LC molecules **312** to rotate and become perpendicular to a surface of the substrate **302** which has the convex Fresnel pattern **330** thereon, for matching the refractive indexes of the substrate **302** and the LC material **310.** In this regard, the refractive index of the substrate **302** and the refractive index of the LC material **310** are equal, for example 1.5. As a result of the refractive indexes matching, the convex Fresnel pattern **330** gets hidden, and a lens having the zero optical power is produced. Furthermore, as shown for example, the GRIN LC lens **104** is also switched OFF, using the second drive signal, which aligns the LC molecules **324** in a homogenous orientation.

Now referring to FIGs. 3G and 3H, illustrated is an exemplary implementation of the hybrid LC lens **100** wherein the substrate **302** of the index-matching LC lens **102** has a concave Fresnel pattern **332** thereon, for producing negative and zero first optical powers, respectively, in accordance with still another embodiment of the present disclosure. In FIG. 3G, the first optical power to be produced is a negative optical power, while in FIG. 3H, the first optical power to be produced is a zero optical power.

In FIG. 3G, the index-matching LC lens **102** is switched ON, using the first drive signal. For example, an effective voltage of **V4** volts (**V4** being non-zero) may be created across the electrodes **306** and **308** of the index-matching LC lens **102,** by the first drive signal. This effective voltage causes the LC molecules **312** to rotate and become perpendicular to a surface of the substrate **302** which has the concave Fresnel pattern **332** thereon, for creating a refractive index difference between the substrate **302** and the LC material **310.** In this regard, a refractive index of the substrate **302** may be 1.8 and a refractive index of the LC material **310** may be 1.5. As a result of creation of the refractive index difference and the concave Fresnel pattern **332,** a negative lens (i.e., a diverging lens) having the negative optical power is produced. Furthermore, as shown for example, the GRIN LC lens **104** is also switched ON, using the second drive signal, which selectively rotates the LC molecules **324** to create a gradient in refractive index of the LC material **322,** that functions as a lens.

In FIG. 3H, the index-matching LC lens **102** is switched OFF, using the first drive signal. For example, an effective voltage of zero volts (**0V**) may be created across the electrodes **306** and **308** of the index-matching LC lens **102,** by the first drive signal. This effective voltage causes the LC molecules **312** to rotate and become parallel to a surface of the substrate **302** which has the concave Fresnel pattern **332** thereon, for matching the refractive indexes of the substrate **302** and the LC material **310.** In this regard, the refractive index of the substrate **302** and the refractive index of the LC material **310** are equal, for example 1.8. As a result of the refractive indexes matching, the concave Fresnel pattern **332** gets hidden, and a lens having the zero optical power is produced. Furthermore, as shown for example, the GRIN LC lens **104** is also switched OFF, using the second drive signal, which aligns the LC molecules **324** in a homogenous orientation.

It may be understood by a person skilled in the art that the FIGs. 3A, 3B, 3C, 3D, 3E, 3F, 3G, and 3H are merely examples for sake of clarity, which should not unduly limit the scope of the claims herein. The person skilled in the art will recognize many variations, alternatives, and modifications of embodiments of the present disclosure. For example, in some embodiments, the index-matching LC lens **102** may be OFF (i.e., the first optical power may be zero), while the GRIN LC lens **104** is ON (i.e., the at least one second optical power may be non-zero).

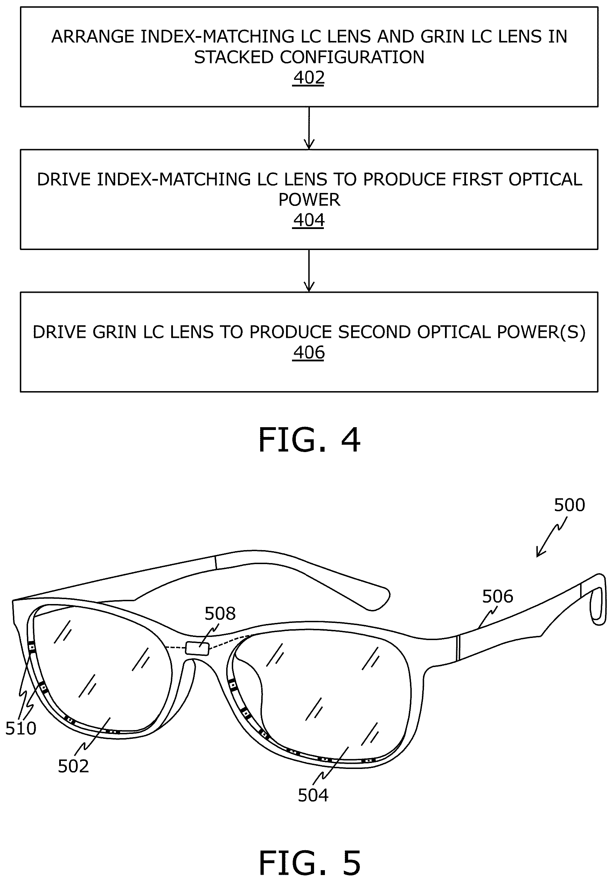

Referring to FIG. 4, illustrated are steps of a method for driving a hybrid LC lens, in accordance with an embodiment of the present disclosure. At step **402,** an index-matching LC lens and a Gradient Refractive Index (GRIN) LC lens are arranged in a stacked configuration. At step **404,** the index-matching LC lens is driven using a first drive signal, for producing a first optical power. At step **406,** the GRIN LC lens is driven using a second drive signal, for producing at least one second optical power, wherein a combination of the at least one second optical power and the first optical power produces at least one third optical power of the hybrid LC lens. At step **408,** the first drive signal for a first driving circuit is generated, based on the first optical power that is to be produced. At step **410,** the second drive signal for a second driving circuit is generated, based on the at least one second optical power that is to be produced. At step **412,** the at least one third optical power that is to be produced by the hybrid LC lens is determined, by processing eye-tracking data, collected by an eye-tracking means, for determining an optical depth at which a user of the hybrid LC lens is looking; and selecting the at least one third optical power, based on the optical depth at which the user is looking. At step **414,** it is determined whether the at least one third optical power is equal to or greater than a maximum optical power producible by the index-matching LC lens. At step **416,** when it is determined that the at least one third optical power is equal to or greater than the maximum optical power producible by the index-matching LC lens, the first optical power to be equal to the maximum optical power producible by the index-matching LC lens and the at least one second optical power to be equal to a difference between the at least one third optical power and the maximum optical power producible by the index-matching LC lens, are determined.

The aforementioned steps are only illustrative, and other alternatives can also be provided where one or more steps are added, one or more steps are removed, or one or more steps are provided in a different sequence without departing from the scope of the claims. For example, the steps **406** and **406** may be implemented concurrently.

Referring to FIG. 5, illustrated is an exemplary schematic illustration of an optical apparatus **500,** in accordance with an embodiment of the present disclosure. The optical apparatus **500** comprises at least one hybrid LC lens (depicted as two hybrid LC lenses **502** and **504**), a frame **506** employed to hold the two hybrid LC lenses **502** and **504,** and an eye-tracking means **510** communicably coupled to the controller of the two hybrid LC lenses **502** and **504.** The optical apparatus **500** optionally further comprises at least one processor (depicted as a processor **508**), wherein the processor **508** serves as a controller of the two hybrid LC lenses **502** and **504.** Herein, the optical apparatus **500** is, for example, shown as a pair of eyeglasses.

It may be understood by a person skilled in the art that the FIG. 5 includes the exemplary schematic illustration of the optical apparatus **500** for sake of clarity, which should not unduly limit the scope of the claims herein. The person skilled in the art will recognize many variations, alternatives, and modifications of embodiments of the present disclosure. For example, the optical apparatus **500** could be a head-mounted extended-reality (XR) device, a camera, or similar.

## Claims

1. A hybrid liquid crystal (LC) lens (100) comprising:
an index-matching LC lens (102);
a Gradient Refractive Index (GRIN) LC lens (104), wherein the GRIN LC lens and the index-matching LC lens are arranged in a stacked configuration;
a first driving circuit (106) configured to drive the index-matching LC lens using a first drive signal, to produce a first optical power;
a second driving circuit (108) configured to drive the GRIN LC lens using a second drive signal, to produce at least one second optical power, wherein a combination of the at least one second optical power and the first optical power produces at least one third optical power of the hybrid LC lens; and
a controller (110) configured to:
generate the first drive signal for the first driving circuit, based on the first optical power that is to be produced;
generate the second drive signal for the second driving circuit, based on the at least one second optical power that is to be produced;
determine the at least one third optical power that is to be produced by the hybrid LC lens, wherein when determining the at least one third optical power that is to be produced by the hybrid LC lens, the controller is configured to:
process eye-tracking data, collected by an eye-tracking means (112, 510) that is communicably coupled to the controller, to determine an optical depth at which a user of the hybrid LC lens is looking,; and
select the at least one third optical power, based on the optical depth at which the user is looking;
determine whether the at least one third optical power is equal to or greater than a maximum optical power producible by the index-matching LC lens; and
determine the first optical power to be equal to the maximum optical power producible by the index-matching LC lens and determine the at least one second optical power to be equal to a difference between the at least one third optical power and the maximum optical power producible by the index-matching LC lens, when it is determined that the at least one third optical power is equal to or greater than the maximum optical power producible by the index-matching LC lens.

2. A hybrid LC lens (100) according to claim 1, wherein the controller (110) is further configured to determine the first optical power to be equal to zero and determine the at least one second optical power to be equal to the at least one third optical power, when it is determined that the at least one third optical power is lesser than the maximum optical power producible by the index-matching LC lens (102).

3. A hybrid LC lens (100) according to any of the preceding claims, wherein in the stacked configuration, the index-matching LC lens (102) and the GRIN LC lens (104) are joined together using an adhesive (202) whose refractive index matches a refractive index of corresponding substrates of the index-matching LC lens and the GRIN LC lens.

4. A hybrid LC lens (100) according to any of claims 1-2, wherein in the stacked configuration, the index-matching LC lens (102) and the GRIN LC lens (104) are fabricated on opposite sides of a common substrate (204).

5. A hybrid LC lens (100) according to any of the preceding claims, wherein substrates (302, 304, 314, 316) and electrodes (306, 308, 318, 320) of the index-matching LC lens (102) and the GRIN LC lens (104) are at least partially optically transparent.refractive error of an eye of the userrefractive error of an eye of the user

6. A hybrid LC lens (100) according to any of the preceding claims, wherein at least one substrate (302) of the index-matching LC lens (102) has a Fresnel pattern thereon, the Fresnel pattern being one of: a convex Fresnel pattern (326, 330), a concave Fresnel pattern (328, 332).

7. A hybrid LC lens (100) according to claim 6, wherein when the Fresnel pattern is the convex Fresnel pattern (326) and the first optical power to be produced is a positive optical power, the first drive signal applies a non-zero effective voltage across electrodes of the index-matching LC lens (102) to create a refractive index difference wherein a refractive index of the at least one substrate (302) having the convex Fresnel pattern is greater than a refractive index of a LC material (310) of the index-matching LC lens.

8. A hybrid LC lens (100) according to claim 6, wherein when the Fresnel pattern is the concave Fresnel pattern (328) and the first optical power to be produced is a positive optical power, the first drive signal applies a zero effective voltage across electrodes of the index-matching LC lens (102) to create a refractive index difference wherein a refractive index of the at least one substrate (302) having the concave Fresnel pattern is lesser than a refractive index of a LC material (310) of the index-matching LC lens.

9. A hybrid LC lens (100) according to claim 6, wherein when the Fresnel pattern is the convex Fresnel pattern (330) and the first optical power to be produced is a negative optical power, the first drive signal applies a zero effective voltage across electrodes of the index-matching LC lens (102) to create a refractive index difference wherein a refractive index of the at least one substrate (302) having the convex Fresnel pattern is lesser than a refractive index of a LC material (310) of the index-matching LC lens.

10. A hybrid LC lens (100) according to claim 6, wherein when the Fresnel pattern is the concave Fresnel pattern (332) and the first optical power to be produced is a negative optical power, the first drive signal applies a non-zero effective voltage across electrodes of the index-matching LC lens (102) to create a refractive index difference wherein a refractive index of the at least one substrate (302) having the concave Fresnel pattern is greater than a refractive index of a LC material (310) of the index-matching LC lens.

11. A method for driving a hybrid liquid crystal (LC) lens (100), the method comprising:
arranging an index-matching LC lens (102) and a Gradient Refractive Index (GRIN) LC lens (104) in a stacked configuration;
driving the index-matching LC lens using a first drive signal, for producing a first optical power;
driving the GRIN LC lens using a second drive signal, for producing at least one second optical power, wherein a combination of the at least one second optical power and the first optical power produces at least one third optical power of the hybrid LC lens;
generating the first drive signal for a first driving circuit (106), based on the first optical power that is to be produced;
generating the second drive signal for a second driving circuit (108), based on the at least one second optical power that is to be produced;
determining the at least one third optical power that is to be produced by the hybrid LC lens, by
processing eye-tracking data, collected by an eye-tracking means (112, 510), for determining an optical depth at which a user of the hybrid LC lens is looking,; and
selecting the at least one third optical power, based on the optical depth at which the user is looking;
determining whether the at least one third optical power is equal to or greater than a maximum optical power producible by the index-matching LC lens (102); and
determining the first optical power to be equal to the maximum optical power producible by the index-matching LC lens and determine the at least one second optical power to be equal to a difference between the at least one third optical power and the maximum optical power producible by the index-matching LC lens, when it is determined that the at least one third optical power is equal to or greater than the maximum optical power producible by the index-matching LC lens.

12. An optical apparatus (500) comprising:
at least one hybrid LC lens (100, 502, 504) according to any of
claims 1-10;
a frame (506) employed to hold the at least one hybrid LC lens; and
an eye-tracking means (112, 510) communicably coupled to a controller of the at least one hybrid LC lens.

13. An optical apparatus (500) according to claim 12, wherein the optical apparatus is one of: a pair of eyeglasses, a head-mounted extended-reality (XR) device, a camera.
